(19) Europäisches Patentamt / European Patent Office / Office européen des brevets

(11) **EP 3 977 085 B1**

(12) **FASCICULE DE BREVET EUROPEEN**

(45) Date de publication et mention
de la délivrance du brevet:
**17.01.2024 Bulletin 2024/03**

(21) Numéro de dépôt: **20726870.7**

(22) Date de dépôt: **26.05.2020**

(51) Classification Internationale des Brevets (IPC):
**G01M 3/16** *(2006.01)* **G08B 13/12** *(2006.01)*
**G08B 17/06** *(2006.01)* **G08B 21/20** *(2006.01)*

(52) Classification Coopérative des Brevets (CPC):
**G01M 3/165; G08B 13/12; G08B 17/06;
G08B 21/20**

(86) Numéro de dépôt international:
**PCT/EP2020/064529**

(87) Numéro de publication internationale:
**WO 2020/239739 (03.12.2020 Gazette 2020/49)**

(54) **SYSTEME DE DETECTION DE SINISTRES DANS LES BATIMENTS**

SYSTEM ZUR ERKENNUNG VON EREIGNISSEN IN GEBÄUDEN ODER SCHIFFEN

SYSTEM FOR DETECTING INCIDENTS IN BUILDINGS OR VESSELS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.05.2019 FR 1905580**

(43) Date de publication de la demande:
**06.04.2022 Bulletin 2022/14**

(73) Titulaire: **SAINT-GOBAIN PLACO**
**92400 Courbevoie (FR)**

(72) Inventeurs:
• **CHAUVIN, David**
**75005 Paris (FR)**
• **BENKEMOUN, Yves**
**78670 Villennes-Sur-Seine (FR)**

(74) Mandataire: **Saint-Gobain Recherche**
**B.P. 135**
**39, quai Lucien Lefranc**
**93303 Aubervilliers Cedex (FR)**

(56) Documents cités:
EP-A2- 2 662 845    WO-A1-2010/064753
US-A- 4 761 638     US-B1- 9 910 003

**Description**

L'invention concerne le domaine des systèmes de détections de sinistres dans les bâtiments, tels que l'intrusion, les fuites d'eau et éventuellement l'incendie. En particulier, le domaine de l'invention concerne les cloisons ou parois réalisées en plaques de plâtre, bois ou ciment qui permettent la détection de l'intrusion ou des dégradations, la détection de fuites d'eau ou infiltration d'humidité, et éventuellement la détection d'incendie avant que le sinistre n'apparaisse dans le bâtiment.

Dans l'état de l'art, le document WO 2010/064753 A1 divulgue un système de détection de fuites d'eau par mesure de tensions sur trois fils conducteurs. Le document EP 2 662 845 A2 divulgue un système de détection comprenant deux fils reliées par une boucle à leurs extrémités respectives et permettant de détecter un incendie ou une fuite.

Le but de l'invention est de pouvoir intégrer le système de détection de manière simple et invisible lors de la pose des parois. Dans le cas des parois en plaque de plâtre, la pose du système de détection ne doit pas nécessiter de connaissance particulière en électronique par les installateurs-poseurs.

Un autre but de l'invention est de fournir un système de détection unique qui puisse détecter l'intrusion ou le défoncement des parois et les fuites d'eau, et avantageusement l'incendie. Un autre but est de fournir un système de détection de faible coût et de faible consommation. Un autre but de l'invention est de pouvoir détecter les sinistres le plus tôt possible, afin de minimiser les coûts de réparation du bâtiment.

Avantageusement, selon une variante d'exécution, le système de détection permet de localiser l'endroit où a eu lieu la fuite d'eau.

Les inventeurs ont découvert qu'il est possible de fournir un dispositif unique de détection permettant de détecter l'intrusion et les fuites d'eau et éventuellement l'incendie dans les bâtiments.

La détection des différents sinistres est basée sur la détection d'un changement et/ou d'une différence de potentiels par un dispositif électronique, dans une bande de détection disposée dans les parois d'un bâtiment ou de préférence derrière les parois d'un bâtiment.

La présente invention a pour objet un système de détection de sinistres, tels que l'intrusion et les fuites d'eau, qui comporte au moins un premier, un deuxième et un troisième éléments conducteurs longiformes (F1, F2, F3) disposés parallèlement et s'étendant entre une première extrémité et une deuxième extrémité ; le deuxième 'élément conducteur (F2) situé entre les premier et troisième éléments (F1 et F3) étant alimenté électriquement par un dispositif électronique ; le dispositif électronique étant apte à mesurer la tension sur les au moins deux autres éléments conducteurs longiformes (F1, F3); les deuxième et troisième éléments conducteurs longiformes (F2, F3) étant reliés à proximité de leur deuxième extrémité par une boucle conductrice ; et la tension dans l'élément conducteur longiforme F1 étant nulle en l'absence de sinistre. Selon l'invention, le dispositif électronique est adapté pour détecter des variations de potentiel sur chacun parmi le premier et le troisième élément conducteur longiforme et, en cas de variation de potentiel sur au moins l'un de ces éléments, de déduire la survenue d'un sinistre parmi plusieurs sinistres pouvant être détectés, à partir à la fois du potentiel sur le premier élément longiforme et du potentiel sur le troisième élément longiforme.

Dans le système de détection selon l'invention, le dispositif électronique applique donc une tension (non nulle) sur le deuxième élément conducteur longiforme F2. En l'absence de sinistre, la tension sur le deuxième élément F2, de même que sur le troisième élément F3 relié électriquement à F2, est donc non nulle, alors que la tension sur le premier élément conducteur longiforme F1 - qui n'est pas relié électriquement à F2 - est nulle (autrement dit le potentiel sur le premier élément F1 est nul).

Le dispositif électronique du système de détection est adapté pour mesurer les tensions respectives sur le premier et sur le troisième élément conducteur longiforme, détecter des variations de ces tensions, et en déduire la survenue d'un sinistre.

Dans la présente demande, et sauf indication contraire, on entend par tension sur un élément conducteur la différence entre le potentiel de cet élément et le potentiel de la masse du dispositif électronique. Avec la masse du dispositif électronique égale à 0V, la tension mesurée sur l'élément conducteur correspond au potentiel de l'élément conducteur.

De plus, dans la suite, le premier élément conducteur longiforme F1 pourra, pour plus de simplicité, être dénommé simplement F1, ou élément F1, ou premier élément. Il en va de même pour les autres éléments conducteurs longiformes.

Enfin, dans toute la présente demande, on entend par tension nulle (=0), une tension nulle ou quasi-nulle, une tension résiduelle négligeable - de l'ordre de quelques millivolts - pouvant parfois être mesurée dans les éléments conducteurs en l'absence d'alimentation. Globalement, une tension mesurée à une valeur inférieure à 10 mV sera considérée comme nulle dans le contexte de l'invention.

A contrario, et sauf indication contraire, une tension supérieure à 0 (>0) désigne dans le texte une tension significativement non nulle, clairement supérieure à la tension résiduelle maximale prédéfinie.

De préférence, la distance (d1) entre le deuxième élément longiforme F2 et le premier élément longiforme F1 est plus petite que la distance (d2) entre le deuxième élément longiforme F2 et le troisième élément longiforme F3, par exemple d2/d1 >4/3.

En particulier, la distance d1 entre le deuxième élément conducteur longiforme F2 et le premier élément conducteur longiforme F1 est comprise entre 1 et 3 mm, de préférence entre 1,5 et 2,5 mm, de telle sorte qu'une goutte d'eau puisse relier les deux éléments conducteurs F1 et F2.

La distance d2 entre les deuxième et troisième éléments longiformes F2 et F3 peut être très variable. Elle est typiquement supérieure ou égale à 1mm, et de préférence supérieure à 2 mm, et peut aller jusqu'à 500 cm. Elle est toutefois de préférence inférieure ou égale à 300 cm, encore plus préférentiellement inférieure ou égale à 30 cm, et encore plus préférentiellement inférieure ou égale à 15 cm. Une plage de valeur préférée est située entre 2 mm et 15 cm.

De préférence, les éléments longiformes (F1, F2, F3) ont des résistances à la déchirure, mesurée selon la méthode Elmendorf, comprise entre 300 et 3000 mN, de préférence entre 500 et 1500 mN, de telle sorte qu'ils se rompent sous l'effet d'une intrusion.

En particulier, les éléments conducteurs longiformes (F1, F2, F3) ont des résistances par mètre inférieures à 1M $\Omega$/m, de préférence comprise entre 20 $\Omega$/m et 600 k$\Omega$/m.

De préférence, la boucle conductrice qui connecte électriquement le deuxième élément (F2) et le troisième élément (F3) a une résistance inférieure à 1000 Ohms, de préférence inférieure à 500 Ohms, encore préférentiellement inférieure à 100 Ohms.

Avantageusement, l'élément conducteur longiforme (F2) situé entre les deux autres éléments conducteurs longiformes (F1 et F3) est alimenté avec une basse tension ($V_{supply}$), de préférence entre 2 et 6 volts.

En particulier, les au moins trois éléments conducteurs longiformes (F1, F2, F3) sont insérés, par exemple par laminage, entre deux supports ayant une résistance à la rupture, mesurée selon la méthode Elmendorf, comprise entre 300 et 3000 mN, de préférence entre 500 et 1500 mN de manière à former une bande de détection. La résistance doit être suffisamment faible pour qu'une intrusion provoque la rupture de la bande de détection.

La résistance totale à la rupture, mesurée selon la méthode Elmendorf, de la bande de détection est de préférence également comprise entre 300 et 3000 mN.

De préférence, au moins un des deux supports est apte à absorber l'eau. Avantageusement, les deux supports sont aptes à absorber l'eau.

Un des deux supports peut être discontinu. De cette manière, les éléments conducteurs sont alors apparents sur une face des bandes, ce qui facilite leur connexion aux deux extrémités du système de détection.

Suivant un mode de réalisation de l'invention, les éléments conducteurs longiformes (F1, F2, F3) sont constitués d'une matière ayant un point de fusion inférieur à 400°C, de préférence inférieur à 300°C, de sorte que le système puisse détecter les incendies. Au plus le point de fusion sera bas, au plus l'incendie sera détecté rapidement. Par exemple, les éléments conducteurs longiformes (F1, F2, F3) peuvent être en étain.

D'autres matières sont toutefois envisageables, tel que le cuivre qui possède une bonne conductivité mais un point de fusion plus élevé. Dans ce cas, il peut être avantageux, pour détecter l'incendie, de munir le système de détection d'un ou plusieurs capteurs de température.

Suivant un autre mode de réalisation, les éléments conducteurs longiformes sont des bandelettes en papier ou carton comportant une matière conductrice. Les bandelettes peuvent être enduites ou imprégnées d'une matière conductrice, par exemple du carbone. Le système de détection selon l'invention comporte en général au moins deux bandes de détection disposées parallèlement l'une au-dessus de l'autre et espacées l'une de l'autre.

La présence de plusieurs bandes de détection offre des informations complémentaires permettant de confirmer/valider la détection et la catégorisation d'un sinistre :
Selon un exemple, le dispositif électronique est adapté pour analyser la cinétique de modification des tensions sur les bandes de détection respectives. Il peut par exemple détecter quelle bande va en premier connaître une ou plusieurs modifications de tension sur ses éléments conducteurs ou l'ordre dans lequel les bandes vont connaître des modifications. Le dispositif électronique est alors adapté pour différencier entre plusieurs types de sinistres, à partir de l'observation de cette cinétique. Par exemple, le dispositif électronique peut être adapté pour mesurer la durée entre un instant T1 où la casse d'une bande de détection est constatée et un instant T2 où la casse d'une bande de détection adjacente est constatée (la casse d'une bande étant par exemple constatée lorsque tension sur F1 = V1 =0 et tension sur F3= V3=0) : par exemple, si la durée mesurée est supérieure à un certain seuil (typiquement une minute), le dispositif pourra conclure à la survenue d'un incendie, plutôt qu'à une intrusion (délai de casse généralement moindre).

Selon un autre exemple, le dispositif électronique peut être adapté pour observer l'ordre dans lequel les bandes de détection sont impactées par un éventuel sinistre, et en déduire ainsi la nature dudit sinistre : il est ainsi supposé qu'un incendie déchirera la bande la plus proche du sol en premier, puis déchirera les bandes de la plus basse à la plus haute, ce qui n'est pas le cas d'une intrusion lors de laquelle les bandes situées au centre du mur seront déchirées en premier, avant celles situées en bas de mur (le cas échéant).

Selon un exemple, le dispositif électronique est adapté pour calculer au moins approximativement la position d'une fuite d'eau le long du premier élément conducteur longiforme F1 à partir de la valeur de potentiel mesuré sur cet élément conducteur longiforme (préférentiellement à une extrémité de cet élément) et des caractéristiques de résistance électrique de cet élément.

Dans le cas où le système de détection comprend trois éléments conducteurs longiformes, et si une augmentation de potentiel est détectée dans le premier élément F1 et si dans le même temps le potentiel sur le troisième élément F3 reste inchangé (cas d'une fuite d'eau), alors on calcule le chemin L parcouru par le courant dans les premiers et deuxième éléments F1 et F2 à partir de la résistance électrique totale entre F1 et F2 (déduite du potentiel mesuré sur F1), la distance entre F1 et F2 et une valeur de résistivité de l'eau, soit approximative (basée sur une valeur de résistivité moyenne), soit issue d'un étalonnage précis effectué directement sur site au moment de l'installation du système de détection.

Selon une variante de réalisation, pour permettre la mesure de l'emplacement d'une fuite d'eau, le système de détection comporte un quatrième élément conducteur longiforme F4 disposé parallèlement aux trois autres; l'élément conducteur longiforme alimenté électriquement (F2) étant situé à équidistance entre l'élément longiforme F1 et l'élément longiforme F4; la résistance électrique par mètre de l'élément conducteur longiforme F1 étant différente de la résistance électrique par mètre de l'élément conducteur longiforme F4. Avec cette variante, la distance entre le quatrième élément conducteur F4 et l'élément conducteur F3 est, de préférence, plus grande que la distance entre l'élément conducteur F4 et l'élément conducteur F2.

De façon similaire au premier élément conducteur longiforme F1, le quatrième élément conducteur longiforme F4 n'est pas relié électriquement au deuxième élément conducteur longiforme F2, en l'absence de sinistre. En l'absence de sinistre, la tension sur ce quatrième élément F4 est donc nulle.

Le dispositif électronique est adapté pour appliquer une tension sur F2, et pour mesurer une tension sur F1, F4 et F3.

La variante de réalisation dite « à quatre fils » permet de s'affranchir de variables, telles que la résistivité de l'eau, qui peut varier, notamment en fonction du lieu géographique. Elle permet également de s'affranchir des variations de température, et du volume de la fuite d'eau (quantité d'eau effectivement présente entre les éléments conducteurs longiformes). Cette variante permet donc une évaluation précise de l'emplacement du sinistre.

Le dispositif électronique comprend par exemple un microcontrôleur, avantageusement doté d'un convertisseur analogique-numérique.

Avantageusement, le dispositif électronique est adapté pour détecter des variations de potentiel sur chacun parmi le premier et le troisième élément conducteur longiforme (F1, F3) et, en cas de variation de potentiel sur au moins l'un de ces éléments, de déduire la survenue d'un sinistre particulier parmi plusieurs sinistres pouvant être détectés, à partir à la fois du potentiel sur le premier élément longiforme (F1) et du potentiel sur le troisième élément longiforme (F3).

Le dispositif électronique peut avantageusement exécuter un programme qui détecte lesdites variations de potentiel et en déduit la survenue d'un sinistre, le cas échéant.

Le dispositif électronique est avantageusement adapté pour émettre un signal correspondant au sinistre détecté.

Selon un exemple, le dispositif électronique est adapté pour distinguer entre trois sinistres différents, auxquels correspondent trois états différents des potentiels sur le couple formé par le premier et le troisième éléments conducteurs longiformes (F1,F3).

On comprend que, dans le système selon l'invention et en situation normale, le dispositif électronique mesure : tension V1 dans F1 = 0 ; tension V3 dans F3 >0

Selon un exemple, le dispositif électronique est capable de détecter

- une augmentation de potentiel sur le premier élément conducteur longiforme (F1) avec le potentiel sur le troisième élément conducteur (F3) resté inchangé, qui correspond à la détection d'une fuite d'eau;
- une diminution de potentiel sur le troisième élément conducteur longiforme (F3) avec le potentiel sur le premier élément conducteur (F1) resté inchangé, qui correspond à la détection d'une intrusion;
- dans le cas où les éléments conducteurs ont un point de fusion inférieur à 400°C : de façon simultanée, une augmentation de potentiel sur le premier élément conducteur longiforme (F1) et une diminution de potentiel sur le troisième élément conducteur longiforme (F3), ce qui correspond à la détection d'un incendie

Selon un exemple, le dispositif électronique est adapté pour analyser la cinétique de modification de la tension sur au moins l'un des éléments conducteurs longiformes. Il est ainsi adapté pour détecter une variation progressive du potentiel sur au moins l'un des éléments conducteurs longiformes.

En particulier, il est avantageux qu'il puisse distinguer entre une variation instantanée et une variation progressive de potentiel sur au moins un élément conducteur longiforme (F3 en particulier), de façon à distinguer entre deux sinistres différents.

Ainsi, en particulier lorsque les éléments conducteurs sont en papier ou carton imprégné de matière conductrice, le dispositif électronique est avantageusement capable de détecter une diminution progressive de potentiel dans l'élément conducteur longiforme F3 (situation 3') qui correspond à la détection d'un incendie, et de distinguer cette situation d'une diminution brutale de potentiel dans F3 (situation 1) qui correspond à une rupture nette du circuit et donc à une situation d'intrusion.

La présente invention a également pour objet l'utilisation du système de détection décrit ci-dessus pour la fabrication de bâtiments comportant des parois intelligentes, les au moins trois éléments conducteurs longiformes parallèles (F1, F2, F3) étant disposés de préférence horizontalement, de préférence de manière invisible derrière les parois, ou éventuellement dans les parois.

Le microcontrôleur est relié au réseau électrique et avantageusement disposé de manière accessible par un occupant.

La présente invention a également pour objet des méthodes de détection de sinistres, en particulier :

1) la détection de l'intrusion dans un bâtiment équipé d'un système de détection tel que décrit ci-dessus, consiste à détecter une diminution de potentiel dans l'élément conducteur longiforme F3 ;

2) la détection d'une fuite d'eau dans un bâtiment équipé d'un système de détection tel que décrit ci-dessus, consiste à détecter une augmentation de potentiel dans l'élément conducteur longiforme F1 ;

3) la détection d'un incendie. Lorsque les éléments conducteurs ont un point de fusion inférieur à 400°C, la méthode consiste à détecter une augmentation de potentiel dans l'élément conducteur longiforme F1 et une diminution de potentiel dans l'élément conducteur longiforme F3. Lorsque les éléments conducteurs sont en papier ou carton imprégné de matière conductrice, la détection de l'incendie consiste à détecter l'apparition progressive sur les différentes bandes de détection, d'une diminution de potentiel dans les éléments conducteurs longiformes F3.

L'invention concerne aussi l'utilisation du système de détection selon l'invention pour la fabrication de bâtiments comportant des parois intelligentes, les au moins trois éléments conducteurs longiformes parallèles (F1, F2, F3) étant disposés de préférence horizontalement, de manière invisible, derrière les parois. Alternativement, il est envisageable de disposer les bandes de détection devant ou dans les parois. Lorsqu'il s'agit de parois en plaques de plâtre, le système de détection selon l'invention peut être disposé entre le plâtre et la feuille de papier recouvrant le plâtre, de préférence du côté extérieur de la plaque de plâtre.

La réalisation de parois intelligentes comportant le dispositif selon l'invention comporte au moins la succession des étapes suivantes :

- Pose d'une ossature de support des parois ;
- Déroulement d'au moins une bande de détection comportant au moins trois éléments conducteurs longiformes, entre une extrémité E1 et une extrémité E2 ; (et fixation sur l'ossature, notamment au moyen d'un ruban adhésif)
- Pose d'une boucle conductrice sur les éléments conducteurs longiformes F2 et F3 de chaque bande de détection, à une de leurs extrémités E2;
- Connexion des éléments conducteurs longiformes à un système électronique, à leur extrémité E1 ;
- Pose des plaques plâtre, bois ou ciment.

Le système de détection selon l'invention est particulièrement avantageux car il permet avec un système unique, peu coûteux et facile à monter, de fournir la détection de plusieurs sinistres.

Un des avantages du système de détection selon l'invention est qu'il est indépendant des plaques de paroi. En plaçant les bandes de détection derrière les plaques, il est possible d'avoir des bandes continues sur plusieurs plaques et même sur plusieurs murs, sans nécessité de réaliser des connexions électriques entre les plaques.

Le système consomme peu d'énergie.

Seul le boitier du dispositif électronique est visible et le dispositif électronique accessible à l'utilisateur. Son remplacement peut être réalisé sans démonter les parois.

Les exemples qui suivent illustrent l'invention de manière non-limitative.

Dans les figures ci-dessous, les représentations ne sont pas nécessairement à l'échelle.

La Figure 1 représente une bande de détection comportant trois éléments conducteurs longiformes en vue de face ;

La Figure 2 représente la même bande de détection en coupe ;

La Figure 3 représente une paroi intelligente en cours de montage ;

La Figure 4 représente une paroi intelligente terminée ;

La Figure 5 représente une variante de réalisation où la bande de détection comporte quatre éléments conducteurs longiformes.

La Figure 6 représente, en coupe, la même bande de détection qu'à la Figure 3.

Exemples

**Exemple 1** : trois fils

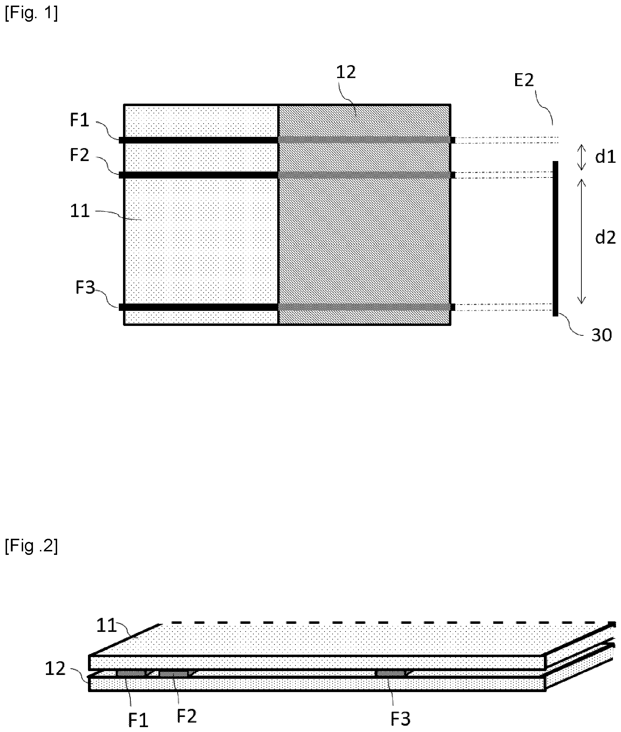

Les Figures 1 et 2 illustrent une bande de détection enroulable 10 comportant deux supports 11, 12 en matière électriquement isolante, par exemple en papier et trois fils conducteurs F1, F2, F3, laminés entre les deux supports 11 et 12. Les supports en papier utilisés pour l'exemple de réalisation ont une épaisseur de 0.4 mm.
Les supports en papier ou carton ont l'avantage d'absorber l'humidité et d'être facilement déchirables.
Les supports peuvent aussi être réalisés dans d'autres matières pour autant qu'ils soient facilement rompus lors d'une intrusion ou de l'endommagement de la paroi et qu'au moins un des deux absorbe l'eau.
Les fils conducteurs F1, F2, F3 sont réalisés dans une matière conductrice et leur diamètre doit être suffisamment réduit pour obtenir une résistance mécanique faible tout en conservant une résistance électrique par mètre appropriée.
Plus la résistance par mètre est faible, plus la bande de détection pourra être longue.
Dans l'exemple de réalisation, les trois fils sont identiques. Ils sont en étain, leur diamètre est d'environ 0,1 mm et leur résistance électrique par mètre ($\rho$) est d'environ 10 $\Omega$/m.
La résistance à la rupture de l'ensemble de la bande « Lorentzen & Wettre L&W Tearing tester ». Pour obtenir une valeur moyenne, le test est réalisé 3 fois sur un empilement de 10 bandes. Une valeur moyenne de 800mN a été obtenue.
La distance entre le fil F1 et le fil F2 (par exemple 2 mm) est moins importante que la distance entre le fil F2 et le fil F3 (par exemple 10 mm).

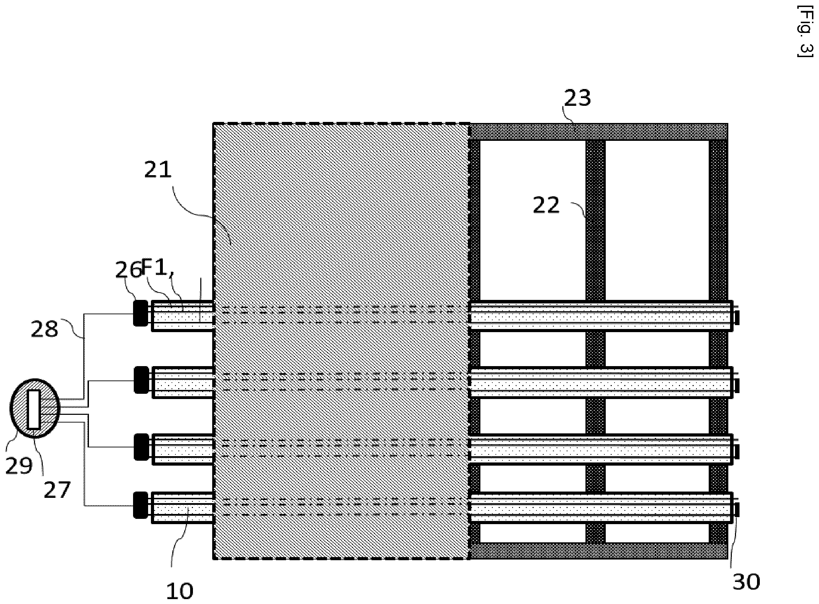

La Figure 3 illustre de manière schématique une paroi 20 pour deux plaques de plâtre 21. La paroi comporte une armature sur laquelle des plaques de plâtre 21 peuvent être fixées. L'armature comporte des montants verticaux 22 et des rails horizontaux 23. Quatre bandes de détection 10 sont positionnées horizontalement, fixées sur les montants de l'armature et espacées de manière équidistante. Chaque bande de détection 10 s'étend d'une extrémité E1 à une extrémité E2. Elles peuvent s'étendre sur plusieurs murs d'une même pièce.
A l'extrémité E1, les fils conducteurs F1, F2, F3 de chaque bande sont connectés à un connecteur 26. Chaque connecteur 26 est relié à un microcontrôleur 27, via un câble 28. Le microcontrôleur 27 est inséré dans un boitier 29. Le boitier 29 est apte à être encastré dans une plaque de plâtre 21, de telle sorte que le microcontrôleur 27 soit accessible aux occupants de la pièce délimitée par les parois 20.
Le microcontrôleur 27 comporte un circuit électronique comportant des entrées et des sorties afin d'alimenter les fils F2 et mesurer les tensions sur les autres fils.
A l'extrémité E2, les fils F2 et F3 sont reliées par une boucle conductrice 30 (voir Fig 3) Les bandes de détection 10 sont de préférence disposées dans la partie inférieure de la paroi 20 (jusqu'à une hauteur d'environ 1,5 m) là où les risques de défoncement de la paroi et les risques de fuites d'eau sont les plus importants et pour ne pas interférer avec la fixation d'objets sur la partie haute de la paroi (meubles ou décoration).
La réalisation de la paroi intelligente comporte les étapes suivantes :

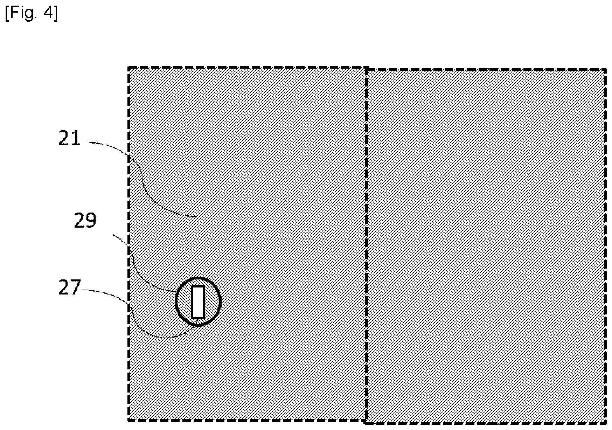

- positionnement des montants 22 et rails 23 de l'ossature (généralement métallique) de manière traditionnelle;
- fixation des éléments adhésifs sur les montants 23 aux différentes hauteurs voulues ;
- pose des bandes de détection 10 horizontalement sur les adhésifs des différents montants 23; la bande 10 est continue entre ses deux extrémités E1 et E2 et peut se continuer sur plusieurs murs ;
- A une extrémité E1 de la bande 10, les trois fils sont rassemblés dans un câble 28 via un connecteur 26 ;
- A l'autre extrémité E2 des bandes 10, une boucle conductrice 30 est posée de manière à relier les fils F2 et F3 et à former un circuit fermé. Le fil F1 est suffisamment espacé du fil F2 pour ne pas entrer en contact avec le circuit fermé.
- Le microcontrôleur 27 est placé dans un boitier d'encastrement 29 ;
- Les câbles 28 sont branchés sur le circuit électronique du microcontrôleur 27 ;
- Les plaques de plâtre 21 sont posées contre les bandes de détection 10 et fixées sur les montants 22 et les rails 23 de l'ossature ;
- Le boitier d'encastrement 29 est inséré dans une des plaques de plâtre (voir Fig. 4) comme réalisé habituellement pour les boitiers d'encastrement des appareillages électriques.

Lorsqu'il n'y a pas de sinistre et que le microcontrôleur est alimenté électriquement, une tension V2 ou $V_{supply}$ (par exemple 5 volts) alimente les fils F2 de chaque bande 10. La tension V1 sur les fils F1 est nulle car les fils F1 ne sont pas en contact avec les fils F2. Les fils F3 étant reliés aux fils F2 par l'intermédiaire de la boucle conductrice 30, une tension V3 supérieure à 0 apparaît sur les fils F3.
La tension V3 sera fonction de la résistance par mètre des fils F2 et F3 et de leur longueur. Le microcontrôleur détecte donc le signal : V1 = 0 Volt ; V3 > 0 Volt.
En cas d'intrusion, la plaque de plâtre est défoncée à au moins un endroit et les 3 fils d'au moins une bande sont rompus de manière nette et rapide. La tension V3 passe d'une tension supérieure à 0 V à 0 volt.

Le microcontrôleur détecte donc le signal : V1 = 0 Volt ; V3 = 0 Volt.

En cas de fuite d'eau, au moins un des supports des bandes de détection étant perméable à l'eau, l'humidité va pénétrer à l'intérieur des bandes de détection. Les fils F1 et F2 étant très rapprochés, la ou les gouttes d'eau vont faire conduction entre les fils F1 et F2 d'au moins une bande impactée par l'humidité. La tension V1 du fil F1 passe de 0 à une tension supérieure à 0V.

Le microcontrôleur détecte donc le signal : V1 > 0 Volt et V3 > 0 Volt.

En cas d'incendie, les fils F1, F2 et F3 vont fondre, créant une connexion entre les fils rapprochés F1 et F2 et créant la rupture de la boucle conductrice 30. La tension V1 de F1 passe de 0 une tension supérieure à 0 Volt et la tension V3 de F3 passe d'une tension supérieure à 0 Volt à 0 Volt car la distance entre F2 et F3 est suffisamment grande pour que les fils F2 et F3 n'entrent pas en connexion.

Le microcontrôleur détecte donc le signal : V1 > 0 Volt et V3 = 0 Volt.

Lorsque le microcontrôleur détecte une de ces variations de potentiels, il envoie un signal (sonore et/ou lumineux) ou un message et/ou courriel à une personne déterminée (propriétaire, voire service de police ou de sécurité).

Il est possible de réaliser les fils conducteurs dans d'autres matières conductrices, éventuellement disponibles à un cout plus faible.

Si le point de fusion des fils conducteurs est supérieur à 400°C, voire supérieur à 300°C, (fil en acier par exemple), la détection d'un incendie pourrait être trop lente. Il est alors envisageable d'ajouter un capteur de température au niveau du microcontrôleur.

Selon cet exemple de réalisation, il n'est pas possible de détecter l'endroit exact de la fuite d'eau.

**Exemple 2** : trois bandelettes

Il est possible de réaliser le même dispositif en remplaçant les fils conducteurs par des bandelettes en papier ou carton imprégnées, ou enduites sur une face, d'une matière conductrice.

Dans ce cas, la distance entre les bandelettes F1 et F2 reste de l'ordre de 2mm. La distance entre les bandelettes F2 et F3 peut être augmentée en gardant le même principe que pour l'exemple 1.

Tout comme à l'exemple 1, les bandelettes F1, F2, F3 sont insérées entre deux supports en papier 11, 12 (voir Figure 2) pour former une bande de détection 10.

Si la distance entre les bandelettes F2 et F3 est suffisante, il est possible de couvrir suffisamment la hauteur souhaitée de la paroi en plaçant seulement deux ou trois bandes de détection 10, sur la partie inférieure des montants 22.

En cas d'intrusion ou de fuite d'eau, le système fonctionne comme à l'exemple 1.

En cas d'incendie, l'augmentation de la température entraînera une rupture progressive des différentes bandes de détection (et des bandelettes conductrices) par combustion des supports 11, 12 et des bandelettes F1, F2, F3.

Le microcontrôleur détecte une apparition progressive dans les différentes bandes du signal : V1 = 0 Volt et V3 = 0 Volt.

Le retard de rupture entre deux bandes de détection 10 peut être de l'ordre de la minute alors que l'intrusion entraînera une rupture de plusieurs bandes simultanément ou quasi simultanément. Le microcontrôleur pourra donc différencier la rupture des bandes dues à une intrusion de la rupture des bandes due à l'incendie, par la cinétique de rupture.

**Exemple 3** : quatre bandelettes

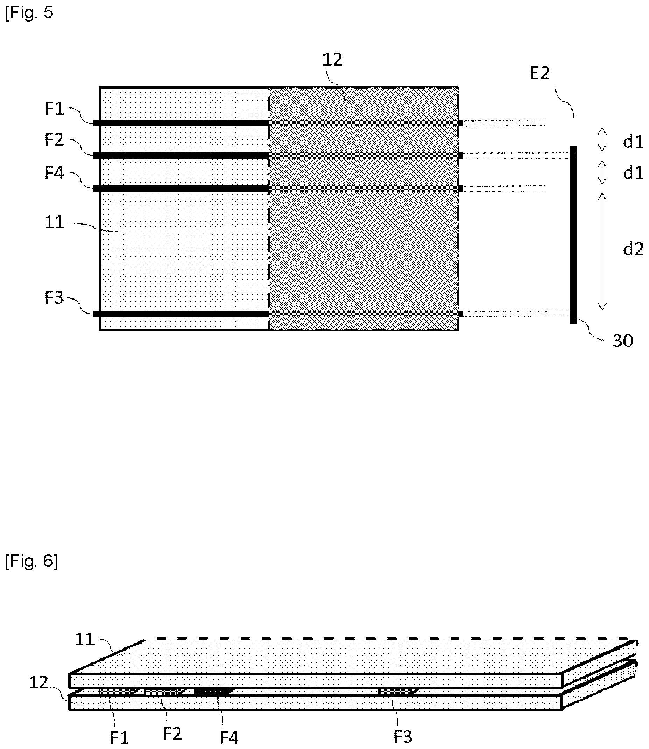

Les Figures 3 et 6 illustrent une variante qui permet, en plus, de détecter précisément l'endroit d'une fuite d'eau. La résistivité de l'eau peut varier d'un facteur 10 d'en endroit à l'autre. L'ajout d'un élément conducteur d'une résistivité différente des autres permet de supprimer l'influence des variations de résistivité de l'eau.

Les bandes de détection comportent donc quatre éléments conducteurs longiformes F1, F2, F3 et F4, par exemple des bandelettes de 2 cm de large.

Les bandelettes sont en papier imprégnées d'un métal conducteur tel que le Carbone. Suivant la quantité de métal conducteur déposé, on peut obtenir des bandelettes de conductivités différentes.

Dans l'exemple illustré, la résistance électrique par mètre de chacune des bandelettes F1, F2 et F3 est ($\rho_{fil1}$) de 25 kΩ/m et la résistance électrique par mètre de la bandelette F4 ($\rho_{fil2}$) est de 20 Ω/m.

Les bandelettes F1, F2 et F4 sont disposées parallèlement. Les bandelettes F1 et F4 sont à équidistance (par exemple 2mm) de F2. La distance entre la bandelette F4 et la bandelette F3 doit être plus grande, par exemple de l'ordre de 10 mm.

La bandelette F2, située entre les bandelettes F1 et F4 est alimentée avec une tension $V_{supply}$. Les bandelettes F1 et F4 sont à égale distance de la bandelette F2. Comme pour les exemples précédents, cette distance doit être suffisamment faible pour qu'une goutte d'eau fasse connexion électrique entre les bandelettes F1, F2 et F4 sans atteindre la bandelette F3.

Le microcontrôleur va mesurer une tension $V_{out1}$ (en F1) et une tension $V_{out2}$ (en F4) selon le principe d'un pont diviseur de tension. La distance, L, entre le microcontrôleur et la fuite d'eau pourra être mesurée à l'aide de l'équation suivante :

$$\lvert(\rho_{fil1} - \rho_{fil2})L = R_2 V_{supply}\left(\frac{1}{V_{out1}} - \frac{1}{V_{out2}}\right)$$

où R2 est une résistance de rappel (« pull down » en anglais) entre F1 (et F4) et la masse sur le dispositif électronique, ajoutée au microcontrôleur.

Cette disposition permet de s'affranchir de la résistivité de l'eau qui peut varier fortement d'un endroit à l'autre.

Grâce à cette disposition à quatre éléments conducteurs, il est possible pour une bande de détection de 100m de long de localiser une fuite d'eau avec une précision de 2m près, quel que soit la résistivité de l'eau à l'endroit où le système de détection est installé et sans que l'installateur ait besoin d'effectuer un étalonnage du système.

L'invention ne se limite pas à ces exemples de réalisation.

Pour limiter la consommation du système lorsque l'utilisateur occupe le bâtiment, un interrupteur peut être ajouté au microcontrôleur, de telle sorte que l'utilisateur peut interrompre le système en ouvrant le circuit F2-F3. De cette manière, il conserve la détection du dégât des eaux mais il supprime la détection de l'intrusion. Si un capteur de température est ajouté, on maintien la détection de l'incendie.

Les parois peuvent être d'une autre nature, comme des plaques ou lames de bois, de matière organique ou polymérique. Les parois peuvent être recouvertes d'une finition telle que peinture, carrelages, etc.

Le système de détection selon l'invention peut être installé aussi bien dans des bâtiments terrestres que marins, tels que par exemple des bateaux ou plateformes offshore.

D'autres modes de réalisation peuvent encore être imaginés sans sortir du cadre de la présente invention.

## Revendications

1. Système de détection de sinistres, tels que l'intrusion et les fuites d'eau, qui comporte au moins un premier, un deuxième et un troisième éléments conducteurs longiformes (F1, F2, F3) disposés parallèlement et s'étendant entre une première extrémité (E1) et une deuxième extrémité (E2) ; le deuxième élément conducteur (F2) situé entre les premier et troisième éléments (F1 et F3) étant alimenté électriquement par un dispositif électronique (27) ; le dispositif électronique (27) étant apte à mesurer la tension sur les au moins deux autres éléments conducteurs longiformes (F1, F3); les deuxième et troisième éléments conducteurs longiformes (F2, F3) étant reliés à proximité de leur deuxième extrémité (E2) par une boucle conductrice (30) ; et la tension dans le premier élément conducteur longiforme F1 étant nulle en l'absence de sinistre, le dispositif électronique étant adapté pour détecter des variations de potentiel sur chacun parmi le premier et le troisième élément conducteur longiforme (F1, F3) et, en cas de variation de potentiel sur au moins l'un de ces éléments, de déduire la survenue d'un sinistre parmi plusieurs sinistres pouvant être détectés, à partir à la fois du potentiel sur le premier élément longiforme (F1) et du potentiel sur le troisième élément longiforme (F3).

2. Système de détection selon la revendication 1, dans lequel le dispositif électronique est adapté pour distinguer entre trois sinistres différents, auxquels correspondent trois états différents des potentiels sur le couple formé par le premier et le troisième éléments conducteurs longiformes (F1, F3).

3. Système de détection selon la revendication 1 ou 2 dans lequel le dispositif électronique est adapté pour distinguer entre une variation instantanée et une variation progressive de potentiel sur au moins un élément conducteur longiforme.

4. Système de détection selon l'une quelconque des revendications 1 à 3, dans lequel le dispositif électronique est adapté pour calculer au moins approximativement la position d'une fuite d'eau le long du premier élément conducteur longiforme (F1) à partir de la valeur de potentiel mesuré sur cet élément conducteur longiforme et des caractéristiques de résistance électrique de cet élément.

5. Système de détection selon l'une quelconque des revendications 1 à 4, **caractérisée en ce que** la distance (d1) entre le deuxième élément longiforme (F2) et le premier élément longiforme (F1) est plus petite que la distance (d2) entre le deuxième élément longiforme (F2) et le troisième élément longiforme (F3), de préférence le rapport entre la distance (d2) entre le deuxième élément longiforme (F2) et le troisième élément longiforme (F3) et la distance (d1) entre le deuxième élément longiforme (F2) et le premier élément longiforme (F1) est supérieur à 4/3.

6. Système de détection selon l'une quelconque des revendications 1 à 5, **caractérisé en ce que** la distance (d1) entre le deuxième élément conducteur longiforme (F2) et le premier élément conducteur longiforme (F1) est comprise entre 1 et 3 mm, de préférence entre 1,5 et 2,5 mm.

7. Système de détection selon l'une quelconque des revendications précédentes, **caractérisé en ce que** les éléments conducteurs longiformes (F1, F2, F3) ont des résistances à la rupture, mesurée selon la méthode Elmendorf, comprise entre 300 et 3000 mN.

8. Système de détection selon l'une quelconque des revendications précédentes, **caractérisé en ce que** les éléments conducteurs longiformes (F1, F2, F3) ont des résistances par mètre inférieures à 1M $\Omega$/m, de préférence comprise entre 20 $\Omega$/m et 600 k$\Omega$/m.

9. Système de détection selon l'une quelconque des revendications précédentes, **caractérisé en ce que** le deuxième élément conducteur longiforme (F2) situé entre les premier et troisième éléments conducteurs longiformes (F1, F3) est alimenté avec une basse tension ($V_{supply}$), de préférence entre 2 et 6 volts.

10. Système de détection selon l'une quelconque des revendications précédentes, **caractérisé en ce que** les au moins trois éléments conducteurs longiformes (F1, F2, F3) sont insérés entre deux supports (11, 12) ayant une résistance à la rupture, mesurée selon la méthode Elmendorf comprise entre 300 et 3000 mN de manière à former une bande de détection (10).

11. Système de détection selon la revendication précédente, **caractérisé en ce qu'**au moins un des deux supports (11, 12) est apte à absorber l'eau.

12. Système de détection selon l'une quelconque des revendications précédentes, **caractérisé en ce que** les éléments conducteurs longiformes (F1, F2, F3) sont constitués d'une matière ayant un point de fusion inférieur à 400°C, de préférence inférieur à 300°C, de sorte que le système puisse détecter les incendies.

13. Système de détection selon la revendication précédente, **caractérisé en ce que** les éléments conducteurs longiformes (F1, F2, F3) sont en étain.

14. Système de détection selon l'une quelconque des revendications 1 à 11, **caractérisé en ce que** les éléments conducteurs longiformes (F1, F2, F3) sont des bandelettes en papier ou carton comportant une matière conductrice.

15. Système de détection selon l'une quelconque des revendications 1 à 14, **caractérisé en ce qu'**il comporte au moins deux bandes de détection (10) disposées parallèlement l'une au-dessus de l'autre et espacées l'une de l'autre.

16. Système de détection selon l'une quelconque des revendications précédentes, **caractérisé en ce qu'**il comporte un quatrième élément conducteur longiforme (F4) disposé parallèlement aux trois autres ; le deuxième élément conducteur longiforme alimenté électriquement (F2) étant situé à équidistance entre le premier élément longiforme (F1) et le quatrième élément longiforme (F4) ; la résistance électrique par mètre de l'élément conducteur longiforme (F1) étant différente de la résistance électrique par mètre de l'élément conducteur longiforme (F4).

17. Système de détection selon la revendication précédente, **caractérisé en ce que** la distance entre le quatrième élément conducteur (F4) et le troisième élément conducteur (F3) est plus grande que la distance entre le quatrième élément conducteur (F4) et le deuxième élément conducteur (F2).

18. Utilisation du système de détection selon l'une quelconque des revendications précédentes, pour la fabrication de bâtiments comportant des parois intelligentes, les au moins trois éléments conducteurs longiformes parallèles (F1, F2, F3) étant disposés de préférence de manière invisible, derrière les parois.

19. Utilisation selon la revendication précédente, **caractérisé en ce que** les au moins trois éléments conducteurs longiformes sont disposés horizontalement.

**20.** Utilisation selon l'une quelconque des revendications 18 et 19, **caractérisé en ce que** le dispositif électronique (27) est relié au réseau électrique et disposé de manière accessible par un occupant.

**21.** Méthode de détection de l'intrusion dans un bâtiment équipé d'un système de détection selon l'une quelconque des revendications 1 à 17, **caractérisée en ce qu'**elle consiste à détecter une diminution de potentiel dans le troisième élément conducteur longiforme (F3).

**22.** Méthode de détection d'une fuite d'eau dans un bâtiment équipé d'un système de détection selon l'une quelconque des revendications 1 à 17, **caractérisée en ce qu'**elle consiste à détecter une augmentation de potentiel dans le premier élément conducteur longiforme (F1).

**23.** Méthode de détection d'un incendie dans un bâtiment équipé d'un système de détection selon l'une quelconque des revendications 12 et 13, **caractérisée en ce qu'**elle consiste à détecter une augmentation de potentiel dans le premier élément conducteur longiforme (F1) et une diminution de potentiel dans le troisième élément conducteur longiforme (F3).

**24.** Méthode de détection d'un incendie dans un bâtiment équipé d'un système de détection selon la revendication 14, et comportant plusieurs bandes de détection (10) formées chacune par les au moins trois éléments conducteurs longiformes (F1, F2, F3) insérés entre deux supports (11, 12) ayant une résistance à la rupture, mesurée selon la méthode Elmendorf comprise entre 300 et 3000 mN, **caractérisé en ce que** la méthode consiste à détecter l'apparition progressive sur les différentes bandes de détection (10), d'une diminution de potentiel dans les troisièmes éléments conducteurs longiformes (F3).

**Patentansprüche**

**1.** System zum Erkennen von Schäden, wie das Eindringen und die Leckage von Wasser, das mindestens ein erstes, ein zweites und ein drittes längliches leitendes Element (F1, F2, F3), die parallel angeordnet sind und sich zwischen einem ersten Ende (E1) und einem zweiten Ende (E2) erstrecken, umfasst; wobei das zweite leitende Element (F2), das sich zwischen dem ersten und dem dritten Element (F1 und F3) befindet, von einer elektronischen Vorrichtung (27) elektrisch versorgt wird; wobei die elektronische Vorrichtung (27) geeignet ist, die Spannung an den mindestens zwei anderen länglichen leitenden Elementen (F1, F3) zu messen; wobei das zweite und das dritte längliche leitende Element (F2, F3) in der Nähe ihres zweiten Endes (E2) durch eine Leiterschleife (30) verbunden sind; und die Spannung in dem ersten länglichen leitenden Element F1 bei Abwesenheit eines Schadens null ist, wobei die elektronische Vorrichtung angepasst ist, um Potentialänderungen an jedem des ersten und des dritten länglichen leitenden Elements (F1, F3) zu erkennen und im Falle einer Potentialänderung an mindestens einem dieser Elemente das Auftreten eines Schadens unter mehreren erkennbaren Schäden, aus dem Potential an dem ersten länglichen Element (F1) und zugleich dem Potential an dem dritten länglichen Element (F3), abzuleiten.

**2.** Erkennungssystem nach Anspruch 1, wobei die elektronische Vorrichtung zum Unterscheiden zwischen drei verschiedenen Schäden, denen drei verschiedene Zustände der Potentiale an dem Paar entsprechen, das durch das erste und das dritte längliche leitende Element (F1, F3) ausgebildet wird, angepasst ist.

**3.** Erkennungssystem nach Anspruch 1 oder 2, wobei die elektronische Vorrichtung zum Unterscheiden zwischen einer momentanen und einer allmählichen Änderung des Potentials an mindestens einem länglichen leitenden Element angepasst ist.

**4.** Erkennungssystem nach einem der Ansprüche 1 bis 3, wobei die elektronische Vorrichtung zum mindestens ungefähren Berechnen der Position einer Wasserleckage entlang des ersten länglichen leitenden Elements (F1) aus dem an diesem länglichen leitenden Element gemessenen Potentialwert und den elektrischen Widerstandseigenschaften dieses Elements angepasst ist.

**5.** Erkennungssystem nach einem der Ansprüche 1 bis 4, **dadurch gekennzeichnet, dass** der Abstand (d1) zwischen dem zweiten länglichen Element (F2) und dem ersten länglichen Element (F1) kleiner als der Abstand (d2) zwischen dem zweiten länglichen Element (F2) und dem dritten länglichen Element (F3) ist, wobei vorzugsweise das Verhältnis zwischen dem Abstand (d2) zwischen dem zweiten länglichen Element (F2) und dem dritten länglichen Element (F3) und dem Abstand (d1) zwischen dem zweiten länglichen Element (F2) und dem ersten länglichen Element (F1) größer als 4/3 ist.

6.  Erkennungssystem nach einem der Ansprüche 1 bis 5,
    **dadurch gekennzeichnet, dass** der Abstand (d1) zwischen dem zweiten länglichen leitenden Element (F2) und dem ersten länglichen leitenden Element (F1) zwischen 1 und 3 mm, vorzugsweise zwischen 1,5 und 2,5 mm, beträgt.

7.  Erkennungssystem nach einem der vorstehenden Ansprüche,
    **dadurch gekennzeichnet, dass** die länglichen leitenden Elemente (F1, F2, F3) Bruchfestigkeiten, gemessen gemäß dem Elmendorf-Verfahren, zwischen 300 und 3000 mN aufweisen.

8.  Erkennungssystem nach einem der vorstehenden Ansprüche,
    **dadurch gekennzeichnet, dass** die länglichen leitenden Elemente (F1, F2, F3) Widerstände pro Meter von kleiner als 1 MΩ/m, vorzugsweise zwischen 20 Ω/m und 600 kΩ/m, aufweisen.

9.  Erkennungssystem nach einem der vorstehenden Ansprüche,
    **dadurch gekennzeichnet, dass** das zweite längliche leitende Element (F2), das sich zwischen dem ersten und dem dritten länglichen leitenden Element (F1, F3) befindet, mit einer niedrigen Spannung ($V_{supply}$), vorzugsweise zwischen 2 und 6 Volt, versorgt wird.

10. Erkennungssystem nach einem der vorstehenden Ansprüche,
    **dadurch gekennzeichnet, dass** die mindestens drei länglichen leitenden Elemente (F1, F2, F3) zwischen zwei Trägern (11, 12), die eine Bruchfestigkeit, gemessen gemäß dem Elmendorf-Verfahren, zwischen 300 und 3000 mN aufweisen, eingefügt sind, so dass ein Detektionsstreifen (10) ausgebildet wird.

11. Erkennungssystem nach dem vorstehenden Anspruch,
    **dadurch gekennzeichnet, dass** mindestens einer der zwei Träger (11, 12) geeignet ist, Wasser zu absorbieren.

12. Erkennungssystem nach einem der vorstehenden Ansprüche,
    **dadurch gekennzeichnet, dass** die länglichen leitenden Elemente (F1, F2, F3) aus einem Material, das einen Schmelzpunkt von weniger als 400 °C, vorzugsweise weniger als 300 °C, aufweist, bestehen, so dass das System Brände erkennen kann.

13. Erkennungssystem nach dem vorstehenden Anspruch,
    **dadurch gekennzeichnet, dass** die länglichen leitenden Elemente (F1, F2, F3) aus Zinn sind.

14. Erkennungssystem nach einem der Ansprüche 1 bis 11,
    **dadurch gekennzeichnet, dass** die länglichen leitenden Elemente (F1, F2, F3) Streifen aus Papier oder Pappe, die ein leitendes Material umfassen, sind.

15. Erkennungssystem nach einem der Ansprüche 1 bis 14,
    **dadurch gekennzeichnet, dass** es mindestens zwei parallel übereinander angeordnete und voneinander beabstandete Detektionsstreifen (10) umfasst.

16. Erkennungssystem nach einem der vorstehenden Ansprüche,
    **dadurch gekennzeichnet, dass** es ein viertes längliches leitendes Element (F4) umfasst, das parallel zu den drei anderen angeordnet ist; wobei das zweite elektrisch versorgte längliche leitende Element (F2) sich in gleichem Abstand zwischen dem ersten länglichen Element (F1) und dem vierten länglichen Element (F4) befindet; wobei der elektrische Widerstand pro Meter des länglichen leitenden Elements (F1) sich von dem elektrischen Widerstand pro Meter des länglichen leitenden Elements (F4) unterscheidet.

17. Erkennungssystem nach dem vorstehenden Anspruch,
    **dadurch gekennzeichnet, dass** der Abstand zwischen dem vierten leitenden Element (F4) und dem dritten leitenden Element (F3) größer als der Abstand zwischen dem vierten leitenden Element (F4) und dem zweiten leitenden Element (F2) ist.

18. Verwendung des Erkennungssystems nach einem der vorstehenden Ansprüche für die Herstellung von Gebäuden, die intelligente Wände umfassen, wobei die mindestens drei parallelen länglichen leitenden Elemente (F1, F2, F3) vorzugsweise unsichtbar hinter den Wänden angeordnet sind.

19. Verwendung nach dem vorstehenden Anspruch,

**dadurch gekennzeichnet, dass** die mindestens drei länglichen leitenden Elemente horizontal angeordnet sind.

20. Verwendung nach einem der Ansprüche 18 und 19,
**dadurch gekennzeichnet, dass** die elektronische Vorrichtung (27) mit dem Stromnetz verbunden und angeordnet ist, so dass sie für einen Bewohner zugänglich ist.

21. Verfahren zum Erkennen des Eindringens in ein Gebäude, das mit einem Erkennungssystem nach einem der Ansprüche 1 bis 17 ausgestattet ist,
**dadurch gekennzeichnet, dass** es darin besteht, eine Potentialverringerung in dem dritten länglichen leitenden Element (F3) zu erkennen.

22. Verfahren zum Erkennen einer Wasserleckage in einem Gebäude, das mit einem Erkennungssystem nach einem der Ansprüche 1 bis 17 ausgestattet ist, **dadurch gekennzeichnet, dass** es darin besteht, einen Potentialanstieg in dem ersten länglichen leitenden Element (F1) zu erkennen.

23. Verfahren zum Erkennen eines Brandes in einem Gebäude, das mit einem Erkennungssystem nach einem der Ansprüche 12 und 13 ausgestattet ist, **dadurch gekennzeichnet, dass** es darin besteht, einen Potentialanstieg in dem ersten länglichen leitenden Element (F1) und eine Potentialverringerung in dem dritten länglichen leitenden Element (F3) zu erkennen.

24. Verfahren zum Erkennen eines Brandes in einem Gebäude, das mit einem Erkennungssystem nach Anspruch 14 ausgestattet ist und mehrere Detektionsstreifen (10) umfasst, die jeweils von den mindestens drei länglichen leitenden Elementen (F1, F2, F3) ausgebildet werden, die zwischen zwei Trägern (11, 12), die eine Bruchfestigkeit, gemessen gemäß dem Elmendorf-Verfahren, zwischen 300 und 3000 mN aufweisen, eingefügt sind,
**dadurch gekennzeichnet, dass** das Verfahren darin besteht, das allmähliche Auftreten einer Potentialverringerung in den dritten länglichen leitenden Elementen (F3) an den verschiedenen Detektionsstreifen (10) zu erkennen.

**Claims**

1. A system for detecting incidents, such as an intrusion and water leaks, which comprises at least a first, a second and a third elongate conductive element (F1, F2, F3) which are arranged in parallel and extend between a first end (E1) and a second end (E2); the second conductive element (F2), which is located between the first and third elements (F1 and F3), being electrically powered by an electronic device (27); the electronic device (27) being capable of measuring the voltage on the at least two other elongate conductive elements (F1, F3); the second and third elongate conductive elements (F2, F3) being connected near their second end (E2) by a conductive loop (30); and the voltage in the first elongate conductive element F1 being zero if there are no incidents, the electronic device being suitable for detecting variations in potential on each of the first and the third elongate conductive element (F1, F3) and, if there are variations in potential on at least one of these elements, being suitable for deducing the occurrence of an incident from among a plurality of incidents which can be detected from both the potential on the first elongate conductive element (F1) and the potential on the third elongate conductive element (F3).

2. The detection system according to claim 1, wherein the electronic device is suitable for distinguishing between three different incidents, to which three different states of the potentials on the pair formed by the first and the third elongate conductive elements (F1, F3) correspond.

3. The detection system according to either claim 1 or claim 2, wherein the electronic device is suitable for distinguishing between an instantaneous variation and a progressive potential variation on at least one elongate conductive element.

4. The detection system according to any of claims 1 to 3, wherein the electronic device is suitable for calculating, at least approximately, the position of a water leak along the first elongate conductive element (F1) from the potential value measured on this elongate conductive element and electrical resistance characteristics of this element.

5. The detection system according to any of claims 1 to 4,
**characterized in that** the distance (d1) between the second elongate element (F2) and the first elongate element (F1) is smaller than the distance (d2) between the second elongate element (F2) and the third elongate element (F3), preferably the ratio between the distance (d2) between the second elongate element (F2) and the third elongate element (F3) and the distance (d1) between the second elongate element (F2) and the first elongate element (F1) is greater than 4 to 3.

6. The detection system according to any of claims 1 to 5, **characterized in that** the distance (d1) between the second elongate conductive element (F2) and the first elongate conductive element (F1) is between 1 and 3 mm, preferably between 1.5 and 2.5 mm.

7. The detection system according to any of the preceding claims, **characterized in that** the elongate conductive elements (F1, F2, F3) have tear resistances, measured according to the Elmendorf method, of between 300 and 3000 mN.

8. The detection system according to any of the preceding claims, **characterized in that** the elongate conductive elements (F1, F2, F3) have resistances per meter of less than 1M $\Omega$/m, preferably of between 20 $\Omega$/m and 600 k$\Omega$/m.

9. The detection system according to any of the preceding claims, **characterized in that** the second elongate conductive element (F2), which is located between the first and third elongate conductive elements (F1, F3), is supplied with a low voltage ($V_{supply}$), preferably between 2 and 6 volts.

10. The detection system according to any of the preceding claims, **characterized in that** the at least three elongate conductive elements (F1, F2, F3) are inserted between two supports (11, 12) having a tear resistance, measured according to the Elmendorf method, of between 300 and 3000 mN so as to form a detection strip (10).

11. The detection system according to the preceding claim, **characterized in that** at least one of the two supports (11, 12) is capable of absorbing water.

12. The detection system according to any of the preceding claims, **characterized in that** the elongate conductive elements (F1, F2, F3) are made of a material having a melting point of less than 400°C, preferably of less than 300°C, so that the system can detect fires.

13. The detection system according to the preceding claim, **characterized in that** the elongate conductive elements (F1, F2, F3) are made of tin.

14. The detection system according to any of claims 1 to 11, **characterized in that** the elongate conductive elements (F1, F2, F3) are small strips of paper or cardboard comprising a conductive material.

15. The detection system according to any of claims 1 to 14, **characterized in that** it comprises at least two detection strips (10) which are arranged in parallel with one another and spaced apart from one another.

16. The detection system according to any of the preceding claims, **characterized in that** it comprises a fourth elongate conductive element (F4) which is arranged in parallel with the three others; the second electrically powered elongate conductive element (F2) being situated equidistantly between the first elongate element (F1) and the fourth elongate element (F4); the electrical resistance per meter of the elongate conductive element (F1) being different from the electrical resistance per meter of the elongate conductive element (F4).

17. The detection system according to the preceding claim, **characterized in that** the distance between the fourth conductive element (F4) and the third conductive element (F3) is greater than the distance between the fourth conductive element (F4) and the second conductive element (F2).

18. The use of the detection system according to any of the preceding claims for manufacturing buildings comprising smart walls, the at least three elongate parallel conductive elements (F1, F2, F3) preferably being arranged invisibly behind the walls.

19. The use according to the preceding claim, **characterized in that** the at least three elongate conductive elements are arranged horizontally.

**20.** The use according to either claim 18 or claim 19, **characterized in that** the electronic device (27) is connected to the electrical grid and arranged so that it is accessible by an occupant.

**21.** A method for detecting an intrusion in a building which is equipped with a detection system according to any one of claims 1-17, **characterized in that** the method consists in detecting a decrease in potential in the third elongate conductive element (F3).

**22.** A method for detecting a water leak in a building which is equipped with a detection system according to any one of claims 1-17, **characterized in that** it consists in detecting an increase in potential in the first elongate conductive element (F1).

**23.** A method for detecting a fire in a building which is equipped with a detection system according to either claim 12 or claim 13, **characterized in that** it consists in detecting an increase in potential in the first elongate conductive element (F1) and a decrease in potential in the third elongate conductive element (F3).

**24.** The method for detecting a fire in a building which is equipped with a detection system according to claim 14, and comprising a plurality of detection strips (10) which are each formed by the at least three elongate conductive elements (F1, F2, F3) inserted between two supports (11, 12) having a tear resistance, measured according to the Elmendorf method of between 300 and 3000 mN, **characterized in that** the method consists in detecting the progressive appearance on the different detection strips (10) of a decrease in potential in the third elongate conductive elements (F3).

[Fig. 1]

[Fig .2]

[Fig. 3]

[Fig. 4]

[Fig. 5

[Fig. 6]

## RÉFÉRENCES CITÉES DANS LA DESCRIPTION

**Documents brevets cités dans la description**

- WO 2010064753 A1
- EP 2662845 A2